(19) Europäisches Patentamt / European Patent Office / Office européen des brevets

(11) **EP 4 707 788 A1**

(12) **EUROPEAN PATENT APPLICATION**
published in accordance with Art. 153(4) EPC

(43) Date of publication:
**11.03.2026 Bulletin 2026/11**

(21) Application number: **24823247.2**

(22) Date of filing: **31.05.2024**

(51) International Patent Classification (IPC):
***G01N 23/223*** *(2006.01)*

(52) Cooperative Patent Classification (CPC):
**G01N 23/223**

(86) International application number:
**PCT/JP2024/020003**

(87) International publication number:
**WO 2024/257627 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 JP 2023097750**

(71) Applicant: **Rigaku Corporation
Akishima-shi
Tokyo 196-8666 (JP)**

(72) Inventors:
• IMAHAYASHI, Yoichi
  Takatsuki-shi, Osaka 569-1146 (JP)
• HARA, Shinya
  Takatsuki-shi, Osaka 569-1146 (JP)
• DOI, Makoto
  Takatsuki-shi, Osaka 569-1146 (JP)

(74) Representative: **Dr. Gassner & Partner mbB
Wetterkreuz 3
91058 Erlangen (DE)**

(54) **X-RAY FLUORESCENCE SPECTROMETER**

(57)    In an X-ray fluorescence spectrometer of the present invention, a quantification unit calculates a theoretical standard deviation of a corrected differential intensity as counting precision, based on an uncorrected integrated intensity and an uncorrected differential intensity, by equation (1), and displays the theoretical standard deviation.

$$\sigma_W(I_{t0}, I_{W0}) = ((\partial I_W/\partial I_{t0})^2 \cdot \sigma_{It0}{}^2 + (\partial I_W/\partial I_{W0})^2 \cdot \sigma_{IW0}{}^2)^{1/2} \quad \ldots(1)$$

where, $\sigma_W$: theoretical standard deviation of corrected differential intensity, $I_{t0}$: uncorrected integrated intensity, $I_{w0}$: uncorrected differential intensity, $I_W$: corrected differential intensity, $\sigma_{It0}$: theoretical standard deviation of uncorrected integrated intensity, and $\sigma_{IW0}$: theoretical standard deviation of uncorrected differential intensity.

## Fig. 1

**Description**

CROSS REFERENCE TO THE RELATED APPLICATION

This application is based on and claims Convention priority to Japanese patent application No. 2023-097750, filed June 14, 2023, the entire disclosure of which is herein incorporated by reference as a part of this application.

BACKGROUND OF THE INVENTION

(Field of the Invention)

The present invention relates to an X-ray fluorescence spectrometer which irradiates a sample with primary X-rays and which performs, based on the intensities of generated fluorescent X-rays, quantitative analysis of the sample by a quantification unit which performs counting loss correction.

(Description of Related Art)

In general, in X-ray fluorescence analysis, X-ray counting loss becomes noticeable at a high counting rate, that is, with high-intensity fluorescent X-rays, and thus counting loss correction is performed. As an estimated value of counting precision when counting loss correction is performed, a theoretical standard deviation $\sigma$ calculated based on a statistical error in an intensity I (kcps) obtained through counting loss correction, that is, a theoretical standard deviation $\sigma$ given by $\sigma = (I/1000T)^{1/2}$ using a measuring time T (seconds) and the intensity I (kcps) obtained through counting loss correction, is used.

As another method, in an X-ray fluorescence spectrometer disclosed in Patent Document 1, in order to perform measurement with an appropriate counting time and analysis precision even if counting loss occurs, counting precision (theoretical standard deviation of intensity obtained through counting loss correction) is estimated, as the product of the counting precision of an uncorrected intensity, which is an intensity on which counting loss correction is not performed, and the gradient of the corrected intensity with respect to the uncorrected intensity, whereby the influence of the counting loss is reflected in the counting precision (e.g., see paragraphs 0034 and 0035). The intensity of fluorescent X-rays includes a differential intensity based on the cumulative intensity in a predefined pulse height range including a peak of an analytical line (fluorescent X-rays to be analyzed), and an integrated intensity which is the cumulative intensity incident on a detector in the entire pulse height range, and the X-ray fluorescence spectrometer disclosed in Patent Document 1 uses the integrated intensity as can be understood from equation (6) in paragraph 0032.

[Related Document]

[Patent Document]

[Patent Document 1] JP Laid-open Patent Publication No. 2022-086669

SUMMARY OF THE INVENTION

However, it has been found that, in estimation of counting precision according to theses conventional technologies, fluctuation in counting loss correction is not considered, and thus the higher the intensity of fluorescent X-rays is, the higher (the smaller as a numerical value, the better) the estimated counting precision is, so that counting precision considerably higher than actual repetitive precision in measurement is estimated at a high intensity. In this case, quantitative analysis cannot be performed with appropriate counting precision.

The present invention has been made in view of the problems of the above-described conventional art, and an object of the present invention is to provide an X-ray fluorescence spectrometer which performs quantitative analysis of a sample by a quantification unit configured to perform counting loss correction, and which is the spectrometer capable of calculating and displaying counting precision in which fluctuation in counting loss correction is appropriately reflected.

In order to achieve the above-described object, the present invention is directed to an X-ray fluorescence spectrometer which irradiates a sample with primary X-rays from an X-ray tube and which performs, based on intensities of generated fluorescent X-rays, quantitative analysis of the sample by a quantification unit configured to perform counting loss correction, wherein the quantification unit calculates a theoretical standard deviation of a corrected differential intensity using the following equation (1), and displays the theoretical standard deviation on a display unit.

$$\sigma_W(I_{t0}, I_{W0}) = ((\partial I_W/\partial I_{t0})^2 \cdot \sigma_{It0}^2 + (\partial I_W/\partial I_{W0})^2 \cdot \sigma_{IW0}^2)^{1/2} \quad \ldots(1)$$

where, symbols and terms in the equation are as follows in order starting from left.

$\sigma_W$: theoretical standard deviation of corrected differential intensity
$I_{t0}$: uncorrected integrated intensity (kcps)
$I_{W0}$: uncorrected differential intensity (kcps)
$I_w$: corrected differential intensity (kcps)
$(\partial I_W/\partial I_{t0})$: partial differential coefficient of $I_w$ with respect to $I_{t0}$

$$(\partial I_W/\partial I_{t0}) = ((I_W \cdot \tau_d)/(1 - I_W \cdot \tau_W)) \cdot (\partial I_t/\partial I_{t0})$$

$$= ((I_W \cdot \tau_d)/(1 - I_W \cdot \tau_W)) \cdot ((I_t/I_{t0})/(1 - I_t \cdot \tau_d))$$

$\tau_d$: counting loss correction coefficient with respect to integrated intensity
$\tau_W$: counting loss correction coefficient with respect to differential intensity
$I_t$: corrected integrated intensity (kcps)
$\sigma_{It0}$: theoretical standard deviation of uncorrected integrated intensity

$$\sigma_{It0} = (I_{t0}/1000T)^{1/2}$$

T: measuring time (seconds)
$(\partial I_W/\partial I_{W0})$: partial differential coefficient of $I_W$ with respect to $I_{W0}$

$$(\partial I_W/\partial I_{W0}) = (I_W/I_{W0})/(1 - I_W \cdot \tau_W)$$

$\sigma_{IW0}$: theoretical standard deviation of uncorrected differential intensity

$$\sigma_{IW0} = (I_{W0}/1000T)^{1/2}$$

Each of the above specific mathematical expressions of $\sigma_{It0}$, $\sigma_{IW0}$ is an example in which a Poisson distribution is assumed as the distribution of fluctuation in $I_{t0}$, $I_{W0}$, and a mathematical expression including a correction term such as counting loss, or another probability distribution may be used.

In the X-ray fluorescence spectrometer of the present invention, the quantification unit calculates the theoretical standard deviation of the corrected differential intensity as counting precision, based on the uncorrected integrated intensity and the uncorrected differential intensity, by equation (1), and displays the theoretical standard deviation, whereby fluctuation in counting loss correction can be appropriately reflected in the counting precision. Therefore, quantitative analysis can be easily performed with appropriate counting precision.

In the X-ray fluorescence spectrometer of the present invention, the quantification unit: may obtain a corrected differential intensity at which a variation coefficient which is a ratio of the theoretical standard deviation of the corrected differential intensity to the corrected differential intensity has a local minimum, as an optimal corrected differential intensity, based on a relationship between the uncorrected integrated intensity and the uncorrected differential intensity obtained in advance; on an assumption that a tube current value of the X-ray tube is proportional to the corrected differential intensity, may obtain an optimal tube current value with which the variation coefficient has a local minimum using the optimal corrected differential intensity; and may display the optimal tube current value on the display unit. In this case, since the optimal tube current value with which the variation coefficient which is the ratio of the theoretical standard deviation of the corrected differential intensity to the corrected differential intensity has a local minimum is displayed, quantitative analysis can be more easily performed with appropriate counting precision.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

BRIEF DESCRIPTION OF THE DRAWING

In any event, the present invention will become more clearly understood from the following description of a preferred embodiment thereof, when taken in conjunction with the accompanying drawing. However, the embodiment and the drawing are given only for the purpose of illustration and explanation, and are not to be taken as limiting the scope of the present invention in any way whatsoever, which scope is to be determined by the appended claims. In the accompanying drawing, like reference numerals are used to denote like parts throughout the several views, and:

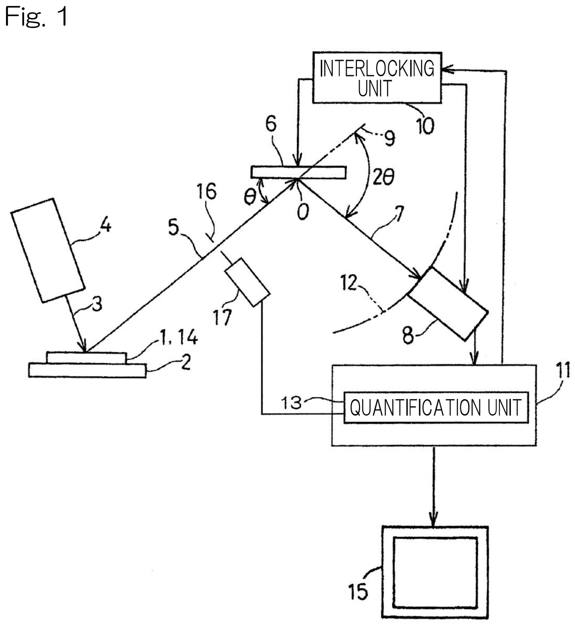

[Fig. 1] Fig. 1 is a schematic diagram of an X-ray fluorescence spectrometer according to an embodiment of the present invention.

DESCRIPTION OF EMBODIMENTS

Hereinafter, an X-ray fluorescence spectrometer according to an embodiment of the present invention will be described. As shown in Fig. 1, the X-ray fluorescence spectrometer of the present embodiment is a sequential X-ray fluorescence spectrometer which irradiates a sample 1, 14 (including both an unknown sample 1 and a standard sample 14) with primary X-rays 3 and which measures the intensities of generated secondary X-rays 5. The X-ray fluorescence spectrometer includes: a sample stand 2 on which the sample 1, 14 is placed; an X-ray tube 4 for irradiating the sample 1, 14 with the primary X-rays 3; a spectroscopic device 6 which monochromates the secondary X-rays 5 such as fluorescent X-rays generated from the sample 1, 14; and a detector 8 on which secondary X-rays 7 resulting from the monochromation by the spectroscopic device 6 are incident and which detects the intensity of the secondary X-rays 7. An output of the detector 8 is input to a control unit 11 such as a computer which controls the entire spectrometer, via an amplifier, a pulse height analyzer, a counting unit, etc. which are not shown.

The X-ray fluorescence spectrometer of the present embodiment is a wavelength dispersive and sequential X-ray fluorescence spectrometer, and includes an interlocking unit 10, that is, a so-called goniometer, which interlocks the spectroscopic device 6 and the detector 8 such that the wavelength of the secondary X-rays 7 incident on the detector 8 is changed. When the secondary X-rays 5 are incident on the spectroscopic device 6 at a certain incident angle θ, an extension line 9 of the secondary X-rays 5 and the secondary X-rays 7 resulting from the monochromation (diffraction) by the spectroscopic device 6 form a spectroscopic angle 20 which is twice the incident angle θ, and the interlocking unit 10 rotates the spectroscopic device 6 about an axis O, which passes through the center of the surface of the spectroscopic device 6 and which is perpendicular to the drawing sheet, such that the secondary X-rays 7 resulting from the monochromation are incident on the detector 8, while changing the wavelength of the secondary X-rays 7 resulting from the monochromation by changing the spectroscopic angle 2θ, and rotates the detector 8 about the axis O along a circle 12 by twice the angle of the rotation. The value of the spectroscopic angle 20 (20 angle) is input from the interlocking unit 10 to the control unit 11. In the present invention, the X-ray fluorescence spectrometer may be a wavelength dispersive and simultaneous multi-elements analysis type X-ray fluorescence spectrometer or may be an energy dispersive X-ray fluorescence spectrometer.

The X-ray fluorescence spectrometer of the present embodiment includes a quantification unit 13 as a program installed in the control unit 11, and performs, based on the measured intensities of the fluorescent X-rays 5, quantitative analysis of the sample 1, 14 by the quantification unit 13 which performs counting loss correction. The quantification unit 13 calculates a theoretical standard deviation $\sigma_W(I_{t0}, I_{W0})$ of a corrected differential intensity by the following equation (1), and displays the theoretical standard deviation $\sigma_W(I_{t0}, I_{W0})$ on a display unit 15 such as a liquid crystal display connected to the control unit 11.

$$\sigma_W(I_{t0},\ I_{W0}) = ((\partial I_W/\partial I_{t0})^2 \cdot \sigma_{It0}{}^2 + (\partial I_W/\partial I_{W0})^2 \cdot \sigma_{IW0}{}^2)^{1/2} \quad \ldots (1)$$

where, symbols and terms in equation (1) are as follows in order starting from the left.

$\sigma_W$: theoretical standard deviation of corrected differential intensity
$I_{t0}$: uncorrected integrated intensity (kcps)
$I_{W0}$: uncorrected differential intensity (kcps)
$I_W$: corrected differential intensity (kcps)
$(\partial I_W/\partial I_{t0})$: partial differential coefficient of $I_w$ with respect to $I_{t0}$

$$(\partial I_W/\partial I_{t0}) = ((I_W \cdot \tau_d)/(1 - I_W \cdot \tau_W)) \cdot (\partial I_t/\partial I_{t0})$$

$$= ((I_W \cdot \tau_d)/(1 - I_W \cdot \tau_W)) \cdot ((I_t/I_{t0})/(1 - I_t \cdot \tau_d))$$

$\tau_d$: counting loss correction coefficient with respect to integrated intensity
$\tau_W$: counting loss correction coefficient with respect to differential intensity
$I_t$: corrected integrated intensity (kcps)
$\sigma_{It0}$: theoretical standard deviation of uncorrected integrated intensity

$$\sigma_{It0} = (I_{t0}/1000T)^{1/2}$$

T: measuring time (seconds)
$(\partial I_W/\partial I_{W0})$: partial differential coefficient of $I_W$ with respect to $I_{W0}$

$$(\partial I_W/\partial I_{W0}) = (I_W/I_{W0})/(1-I_W \cdot \tau_W)$$

$\sigma_{IW0}$: theoretical standard deviation of uncorrected differential intensity

$$\sigma_{IW0} = (I_{W0}/1000T)^{1/2}$$

The above specific mathematical expressions of $\sigma_{It0}$, $\sigma_{IW0}$ are each an example in which a Poisson distribution is assumed as the distribution of fluctuation in $I_{t0}$, $I_{W0}$.

Among the numerical values with respect to equation (1), the uncorrected integrated intensity $I_{t0}$ and the uncorrected differential intensity $I_{W0}$ are obtained through measurement as in a conventional spectrometer, and the counting loss correction coefficient $\tau_d$ with respect to the integrated intensity, the counting loss correction coefficient $\tau_W$ with respect to differential intensity, and the measuring time T are also obtained by being input to the control unit 11 as measurement conditions together with an analytical line, a detector to be used, a pulse height range PHA for detection, etc. as in the conventional spectrometer.

As for the counting loss correction, various correction equations are known, and the following equations (2), (3) based on an extended dead time model (suppression model) are used.

$$I_t = I_{t0}\exp(I_t \cdot \tau_d) \quad \dots(2)$$

$$I_W = I_{W0}\exp(I_t \cdot \tau_d)\exp(I_W \cdot \tau_W) \quad \dots(3)$$

According to an equation in which the corrected integrated intensity It obtained by equation (2) is differentiated partially with respect to the uncorrected integrated intensity $I_{t0}$, an equation in which the corrected differential intensity $I_W$ obtained by equation (3) is differentiated partially with respect to the uncorrected differential intensity $I_{W0}$, and an equation in which the corrected differential intensity $I_W$ obtained by equation (3) is differentiated partially with respect to the uncorrected integrated intensity $I_{t0}$, the partial differential coefficient $(\partial I_W/\partial I_{W0})$ of $I_W$ with respect to $I_{W0}$ and the partial differential coefficient $(\partial I_W/\partial I_{t0})$ of $I_W$ with respect to $I_{t0}$, as described above, are obtained.

In general, the corrected differential intensity $I_W$ is used in quantitative analysis. However, in equation (1), on the assumption that the uncorrected integrated intensity $I_{t0}$ and the uncorrected differential intensity $I_{W0}$ are independent, the product of the theoretical standard deviation $\sigma_{It0}$ of the uncorrected integrated intensity and the partial differential coefficient or the gradient $(\partial I_W/\partial I_{t0})$ of the corrected differential intensity $I_W$ with respect to the uncorrected integrated intensity $I_{t0}$ is obtained, the product of the theoretical standard deviation $\sigma_{IW0}$ of the uncorrected differential intensity and the partial differential coefficient or the gradient $(\partial I_W/\partial I_{W0})$ of the corrected differential intensity $I_W$ with respect to the uncorrected differential intensity $I_{W0}$ is obtained, and the theoretical standard deviation $\sigma_W(I_{t0}, I_{W0})$ of the corrected differential intensity is calculated as the root mean square of the two products. In the X-ray fluorescence spectrometer of the present invention, the theoretical standard deviation $\sigma_W(I_{t0}, I_{W0})$ of the corrected differential intensity is displayed as counting precision, and thus fluctuation in counting loss correction can be appropriately reflected in the counting precision. Therefore, quantitative analysis can be easily performed with appropriate counting precision.

The effect of the present invention was evaluated in the following manner. Measurement was actually performed for an Si-K$\alpha$ line (1.74 keV) repeatedly 20 times by using a PC detector, under measurement conditions of the pulse height range PHA being 100 to 300, measuring time T = 20 (seconds), the counting loss correction coefficient $\tau_d$ with respect to the integrated intensity = $1.42 \times 10^{-7}$, and the counting loss correction coefficient $\tau_W$ with respect to the differential intensity = $1.03 \times 10^{-7}$, to obtain 0.374 as a standard deviation of the corrected differential intensity $I_W$. The average value of the corrected differential intensity $I_W$ was 1207.44 (kcps). Here, a conventional theoretical standard deviation calculated based on a statistical error in the corrected differential intensity $I_W$ is $(1207.44/(1000 \times 20))^{1/2} = 0.246$, and a (high-precision, good) numerical value that is 34% less than the standard deviation of 0.374 obtained through the actual repetitive measurement is estimated.

On the other hand, in the X-ray fluorescence spectrometer of the present invention, the average value of the uncorrected integrated intensity $I_{t0}$: 1052.94 (kcps), the average value of the uncorrected differential intensity $I_{w0}$: 891.68 (kcps), the theoretical standard deviation $\sigma_{It0}$ of the uncorrected integrated intensity = $(I_{t0}/1000T)^{1/2}$ = 0.229, the theoretical standard deviation $\sigma_{IW0}$ of the uncorrected differential intensity = $(I_{W0}/1000T)^{1/2}$ = 0.211, the partial differential coefficient $(\partial I_W/\partial I_{W0})$ of $I_W$ with respect to $I_{W0}$ = $(I_W/I_{W0})/(1-I_W \cdot \tau_W)$ = 1.5464, and the partial differential coefficient $(\partial I_W/\partial I_{t0})$ of $I_W$ with respect to $I_{t0}$ = $((I_W \cdot \tau_d)/(1-I_W \cdot \tau_W)) \cdot ((I_t/I_{t0})/(1-I_t \cdot \tau_d))$ = 0.2851 are used, whereby the theoretical standard deviation $\sigma_W$ of the corrected differential intensity = 0.333 sufficiently close to (only 11% less than) 0.374, which is the standard deviation of the corrected differential intensity $I_W$, obtained through the actual repetitive measurement, is estimated according to equation (1). As described above, in the X-ray fluorescence spectrometer of the present invention, fluctuation in counting loss correction can be appropriately reflected in the theoretical standard deviation $\sigma_W(I_{t0}, I_{W0})$ of the corrected differential intensity as counting precision.

The inventors of the present disclosure has found that, in the course of evaluating fluctuation in counting loss correction, a variation coefficient C.V. which is the ratio of the theoretical standard deviation $\sigma_W$ of the corrected differential intensity to the corrected differential intensity $I_W$ does not monotone decreasing but has a minimum value at high intensity. Therefore, in the X-ray fluorescence spectrometer of the present embodiment, the quantification unit 13 further: obtains a corrected differential intensity at which the variation coefficient C.V. which is the ratio of the theoretical standard deviation $\sigma_W$ of the corrected differential intensity to the corrected differential intensity $I_W$ has a local minimum, as an optimal corrected differential intensity $I_W^{opt}$, based on the relationship between the uncorrected integrated intensity $I_{t0}$ and the uncorrected differential intensity $I_{W0}$ obtained in advance; on the assumption that a tube current value C of the X-ray tube 4 is proportional to the corrected differential intensity $I_W$, obtains an optimal tube current value $C^{opt}$ with which the variation coefficient C.V. has a local minimum using the optimal corrected differential intensity $I_W^{opt}$; and displays the optimal tube current value $C^{opt}$ on the display unit 15.

More specifically, this operation is performed in the following manner. First, the relationship between the uncorrected integrated intensity $I_{t0}$ and the uncorrected differential intensity $I_{W0}$ is obtained in advance according to the measurement conditions of the analytical line, the detector to be used, the pulse height range PHA for detection, etc., and a coefficient of a fitting function of $I_{W0}$ with respect to $I_{t0}$ is stored in the quantification unit 13. In addition, as in the conventional spectrometer, a corrected differential intensity $I_W^{mes}$ of the analytical line and a tube current value $C^{mes}$ at the time of measurement are obtained through preliminary measurement for determining the measurement conditions. As described above, the counting loss correction coefficient $\tau_d$ with respect to the integrated intensity and the counting loss correction coefficient $\tau_W$ with respect to the differential intensity are also obtained by being input as the measurement conditions to the control unit 11 as in the conventional spectrometer.

After the above-described preparation, the corrected integrated intensity It is obtained using the uncorrected integrated intensity $I_{t0}$ as a variable by equation (2), and the uncorrected differential intensity $I_{W0}$ is obtained based on the above-described relationship between the uncorrected integrated intensity $I_{t0}$ and the uncorrected differential intensity $I_{W0}$ obtained in advance. Next, the corrected differential intensity $I_W$ is obtained using the uncorrected differential intensity $I_{W0}$ and the corrected integrated intensity It by equation (3), and further, the variation coefficient C.V. $(I_w) = \sigma_W(I_{t0}, I_{W0})/I_W$ is obtained using the corrected differential intensity $I_W$ by equation (1). This variation coefficient C.V. $(I_w)$ is obtained according to the measurement conditions of the analytical line, the detector to be used, the pulse height range PHA for detection, etc.

The corrected differential intensity at which the variation coefficient C.V. $(I_W)$ has a local minimum is obtained by regression calculation, as the optimal corrected differential intensity $I_W^{opt}$. Further, on the assumption that the tube current value C of the X-ray tube 4 is proportional to the corrected differential intensity $I_W$, the optimal tube current value $C^{opt}$ with which the variation coefficient C.V. has a local minimum is obtained using the optimal corrected differential intensity $I_W^{opt}$, as $C^{opt} = C^{mes} \times (I_W^{opt}/I_W^{mes})$, and displays the optimal tube current value $C^{opt}$ on the display unit 15. In this case, since the optimal tube current value $C^{opt}$ with which the variation coefficient C.V. $(I_w)$ which is the ratio of the theoretical standard deviation $\sigma_W(I_{t0}, I_{W0})$ of the corrected differential intensity to the corrected differential intensity $I_W$ has a local minimum is displayed, quantitative analysis can be more easily performed with appropriate counting precision.

In a case where the optimal corrected differential intensity $I_W^{opt}$ cannot be obtained only by decreasing the tube current value C within a settable range, as shown in Fig. 1, an attenuator 16 having an aperture is advanced to be aligned with the optical path of the fluorescent X-rays 5 by an advance/retreat mechanism 17, thereby attenuating the fluorescent X-rays 7 incident on the detector 8. It is a known technique to use the attenuator 16 with a predefined attenuation factor in combination to control the tube current value C. When the attenuator 16 is used, the quantification unit 13 obtains the optimal corrected differential intensity $I_W^{opt}$ at which the variation coefficient C.V. has a local minimum, with respect to the corrected differential intensity $I_W$ attenuated at the predefined attenuation factor of the attenuator 16, obtains the optimal tube current value $C^{opt}$ with which the variation coefficient C.V. has a local minimum using the optimal corrected differential intensity $I_W^{opt}$, and displays the optimal tube current value $C^{opt}$ together with information on the addition of the attenuator 16 on the display unit 15.

Although the present invention has been fully described in connection with the preferred embodiment thereof with reference to the accompanying drawing which is used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

1 unknown sample
3 primary X-rays
4 X-ray tube
5 fluorescent X-rays
13 quantification unit
14 standard sample
15 display unit

## Claims

1. An X-ray fluorescence spectrometer which irradiates a sample with primary X-rays from an X-ray tube and which performs, based on intensities of generated fluorescent X-rays, quantitative analysis of the sample by a quantification unit configured to perform counting loss correction, wherein

   the quantification unit calculates a theoretical standard deviation of a corrected differential intensity using the following equation (1), and displays the theoretical standard deviation on a display unit,

$$\sigma_W(I_{t0},\ I_{W0}) = ((\partial I_W/\partial I_{t0})^2 \cdot \sigma_{It0}{}^2 + (\partial I_W/\partial I_{W0})^2 \cdot \sigma_{IW0}{}^2)^{1/2} \quad \ldots (1)$$

   where, symbols and terms in the equation are as follows in order starting from left,
   $\sigma_W$: theoretical standard deviation of corrected differential intensity, $I_{t0}$: uncorrected integrated intensity,
   $I_{W0}$: uncorrected differential intensity,
   $I_W$: corrected differential intensity,
   $(\partial I_W/\partial I_{t0})$: partial differential coefficient of $I_W$ with respect to $I_{t0}$,

$$(\partial I_W/\partial I_{t0}) = ((I_W \cdot \tau_d)/(1 - I_W \cdot \tau_W)) \cdot (\partial I_t/\partial I_{t0})$$

$$= ((I_W \cdot \tau_d)/(1 - I_W \cdot \tau_W)) \cdot ((I_t/I_{t0})/(1 - I_t \cdot \tau_d)),$$

   $\tau_d$: counting loss correction coefficient with respect to integrated intensity, $\tau_W$: counting loss correction coefficient with respect to differential intensity, $I_t$: corrected integrated intensity,
   $\sigma_{It0}$: theoretical standard deviation of uncorrected integrated intensity, $(\partial I_W/\partial I_{W0})$: partial differential coefficient of $I_W$ with respect to $I_{W0}$,

$$(\partial I_W/\partial I_{W0}) = (I_W/I_{W0})/(1 - I_W \cdot \tau_W),$$

   and
   $\sigma_{IW0}$: theoretical standard deviation of uncorrected differential intensity.

2. The X-ray fluorescence spectrometer as claimed in claim 1, wherein the quantification unit

   obtains a corrected differential intensity at which a variation coefficient which is a ratio of the theoretical standard deviation of the corrected differential intensity to the corrected differential intensity has a local minimum, as an optimal corrected differential intensity, based on a relationship between the uncorrected integrated intensity and the uncorrected differential intensity obtained in advance,

on an assumption that a tube current value of the X-ray tube is proportional to the corrected differential intensity, obtains an optimal tube current value with which the variation coefficient has a local minimum using the optimal corrected differential intensity, and
displays the optimal tube current value on the display unit.

## Fig. 1

INTERLOCKING UNIT

QUANTIFICATION UNIT

## INTERNATIONAL SEARCH REPORT

| International application No. |
|---|
| **PCT/JP2024/020003** |

**A. CLASSIFICATION OF SUBJECT MATTER**

*G01N 23/223*(2006.01)i
FI: G01N23/223

According to International Patent Classification (IPC) or to both national classification and IPC

**B. FIELDS SEARCHED**

Minimum documentation searched (classification system followed by classification symbols)

G01N 23/00-G01N 23/2276; G01B 15/00- G01B 15/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2022-86669 A (RIGAKU CORP.) 09 June 2022 (2022-06-09) entire text, all drawings | 1-2 |
| A | IDA, Takashi. Monte Carlo simulation of the effect of counting losses on measured X-ray intensities. Journal of Applied Crystallography. [online]. 2007, vol. 40, no. 5, pp. 964-965, [retrieved on 20 June 2024], Internet:<URL:http://www.crl.nitech.ac.jp/~ida/research/reprints/count_loss_2.pdf> entire text, all drawings | 1-2 |
| A | IDA, Takashi et al. Correction for counting losses in X-ray diffractometry. Journal of Applied Crystallography. [online]. 2005, vol. 38, no. 3, pp. 426-432, [retrieved on 20 June 2024], Internet:<URL:http://p-edge4.crl.nitech.ac.jp/~ida/research/reprints/count_loss.pdf> entire text, all drawings | 1-2 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 707 788 A1

**INTERNATIONAL SEARCH REPORT**

International application No.

**PCT/JP2024/020003**

### C.    DOCUMENTS CONSIDERED TO BE RELEVANT

| Category* | Citation of document, with indication, where appropriate, of the relevant passages | Relevant to claim No. |
|---|---|---|
| A | IDA, Takashi. Statistical properties of measured X-ray intensities affected by counting loss. Journal of Applied Crystallography. [online]. 2008, vol. 41, no. 6, pp. 1019-1023, [retrieved on 20 June 2024], Internet:<URL:http://www.crl.nitech.ac.jp/~ida/research/reprints/count_loss_3.pdf><br>       entire text, all drawings | 1-2 |

Form PCT/ISA/210 (second sheet) (July 2022)

12

**INTERNATIONAL SEARCH REPORT**
Information on patent family members

International application No.

**PCT/JP2024/020003**

| Patent document cited in search report | | | Publication date (day/month/year) | Patent family member(s) | | | Publication date (day/month/year) |
|---|---|---|---|---|---|---|---|
| JP | 2022-86669 | A | 09 June 2022 | EP | 4254016 | A1 | |
| | | | | CN | 116507943 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023097750 A

- JP 2022086669 A